# EUROPEAN PATENT APPLICATION

(11) **EP 2 654 349 A1**
(43) Date of publication of application: **23.10.2013**
(21) Application number: 11849459.0
(22) Date of filing: 30.11.2011
(51) Int. Cl.: H04W 52/02, H04W 84/12

(54) **WIRELESS RELAY DEVICE, WIRELESS LAN SYSTEM, WIRELESS RELAY METHOD AND PROGRAM**

(30) Priority: 13.12.2010 JP 2010276767
(71) Applicant: NEC CASIO Mobile Communications, Ltd., Kawasaki-shi Kanagawa 211-8666 (JP)
(72) Inventor: SHINOKI, Yudai, Kawasaki-shi Kanagawa 211-8666 (JP)
(74) Representative: Vossius & Partner
(86) International application number: PCT/JP2011/006705
(87) International publication number: WO 2012/081177

(57) **Abstract**

**[PROBLEM TO BE SOLVED]** Achieve power saving without causing a connection delay

**[SOLUTION]** A wireless relay device (2 to 4) that emits a beacon and makes a wireless connection with a terminal (5∼7) responding to the beacon, which includes a selecting means (10) capable of alternatively selecting a normal mode in which the beacon is emitted in a first cycle and a power saving mode in which the beacon is emitted in a second cycle longer than the first cycle. Since a beacon is emitted In the second cycle longer than the first cycle, the number of times of beacon emissions can be decreased to improve power saving capability. Also, since the beacons are not disrupted, a connection delay is not caused.

## Description

### TECHNICAL FIELD

The present invention relates to a wireless relay device, wireless LAN system, wireless relay method, and program and, in detail, to a wireless relay device, wireless LAN system, wireless relay method, and program with improved power saving capability.

### BACKGROUND ART

A wireless LAN system is a useful system allowing a wireless access to a network resource such as a wired LAN and the Internet via a wireless relay device called an access point (hereinafter abbreviated as an AP), and has been widely spread to homes, workplaces, and public facilities such as stations and airports.

An electronic device capable of using a wireless LAN system is referred to as a wireless LAN terminal, simply a terminal, or a wireless LAN station (hereinafter abbreviated as an STA). Typical STAs include a personal computer and an information terminal. While these are generally portable or transportable (carriable), part of those of a fixed type may be used as STAs with an advantage of no need of a network cable.

A connection between an STA and an AP is made by the STA capturing (also called receiving) a broadcast signal (a signal to an unspecified individual) called a beacon emitted (also called transmitted) from the AP. For example, in the case of a small wireless LAN system with only one AP, a beacon from that AP is captured, and a connection can be made after a predetermined process (such as authentication). On the other hand, in a place such as a workplace or public facility with a wireless LAN system including many APs constructed therein, it is required to select an AP (select an AP as a connection destination). Therefore, a beacon electric power selection scheme is generally adopted, that is, an AP transmitting the strongest beacon is taken as a connection destination.

However, since the band (the upper-limit data amount that can be simultaneously transmitted) of the APs is restricted, if many STAs are connected to a specific AP, data congestion is disadvantageously invited. For this reason, in a wireless LAN system including many APs, a technology (a so-called load distribution technology) is used for making the number of STAs connected to each AP as equal as possible. For example, Patent Document 1 mentioned below describes a load distribution technology in which, to connect an AP (hereinafter, a first AP), a STA compares specific information (a number N1 of terminals as transmission destinations of data to be transmitted from the first AP) included in a beacon from the first AP and a predetermined threshold TH1; when N1>TH1, compares specific information (a number N2 of terminals as transmission destinations of data to be transmitted from the second AP) and the above-mentioned N1; when N1<N2, takes the first AP as a connection destination; and, when N1>N2, takes the second AP as a connection destination.

Also, Patent Document 2 mentioned below also describes a similar load distribution technology. In this technology, load distribution is achieved by lowering beacon electric power of an AP in a high load state (in congestion). The reason for this is, as described above, a beacon electric power selection scheme is adopted, that is, an AP transmitting the strongest beacon is taken as a connection destination. By lowering the beacon electric power of the AP, a new connection to that AP less tends to be made.

By using this load distribution technology, the disadvantage described above, that is, data congestion in a wireless LAN system including a plurality of APs, can be avoided.

Meanwhile, in the wireless LAN system including many APS, in addition to the disadvantage (data congestion) described above, superfluous power consumption due to non-operating APs can be pointed out. That is, the number of STAs present in a system is generally not always constant and, for example, in a workplace, the number in business hours and the number in non-business hours normally have a large difference. In the situation such as non-business hours in which only a small number of STAs or no STA is present, it is a waste of electric power to keep all APs in operation.

This problem of power consumption cannot be ignored particularly in the case of a wireless LAN system having a large number of APs. The reason for this is that, if consumed electric power per AP (generally, on the order of several W at maximum) is assumed to be set at 6 W for convenience in a wireless LAN system having hundred APs, power consumption amounts to 600 W in the entire system. While this value is not extremely large, since an electricity bill per hour for 100 W (0.1 Kwh) is said to be approximately 2 yen, the bill is 12 yen for 600 W, which is sixfold. In a year, a simple arithmetic amounts to no less than 12 yen x 8,760 hours=105,120 yen.

Regarding this point, Patent Document 3 mentioned below describes an AP power saving technology in which a transition is made to a power saving mode only for a predetermined time after beacon transmission. By using this technology, the power saving problem described above can be thought to be solved.

### PRIOR ART DOCUMENTS

### PATENT DOCUMENTS

Patent Document 1: JP 2007-158765
Patent Document 2: JP 2009-534929
Patent Document 3: JP 2010-193290

### DISCLOSURE OF INVENTION

### Problem to be Solved by the Invention

However, the technology described in Patent Document 3 inherits a new problem in that connection delays are generated (a connection is kept waiting).
That is, the technology described in Patent Document 3 is configured in a manner such that information indicating from when to when the power saving mode is active (power saving mode time information) is included in the beacon and transmitted from an AP. An STA receiving this beacon has to again connect to the AP after the time has passed. As a matter of course, during that time, a delay in connection occurs (a connection is waited).

Thus, an object of the present invention is to achieve power savings without causing a connection delay.

### Means for Solving the Problem

The present invention provides a wireless relay device emitting a beacon and making a wireless connection with a terminal responding to the beacon, the device including selecting means capable of alternatively selecting a normal mode in which the beacon is emitted in a first cycle and a power saving mode in which the beacon is emitted in a second cycle longer than the first cycle.

### Effect of the Invention

According to the present invention, since a beacon is emitted in the second cycle longer than the first cycle, the number of times of beacon emission can be decreased to improve power saving capability. Also, since beacons are not disrupted, a connection delay is not caused. Therefore, power saving capability can be achieved without causing a connection delay.

### BRIEF DESCRIPTION OF DRAWINGS

FIG. 1 is a schematic entire structural diagram of a wireless LAN system.
FIG. 2 shows a conceptual structural diagram of an AP, and example structural diagrams of an operating unit 12.
FIG. 3 is a diagram for describing a normal mode and a power-saving mode.
FIG. 4 is a diagram depicting an operation flow of a control unit 10 of the AP.
FIG. 5 shows diagrams for describing two operation modes (the normal mode and the power-saving mode).
FIG. 6 is a diagram depicting a developed example of an embodiment.
FIG. 7 is a diagram depicting an example of an interface screen.
FIG. 8 shows diagrams each depicting a partially improved interface screen 18 of FIG. 7.
FIG. 9 is a diagram depicting relations among APs 2 to 4, STAs 5 to 7, and a server 17.
FIG. 10 shows diagrams depicting a typical use state of a portable AP and use state in a HOTSPOT.

### BEST MODE FOR CARRYING OUT THE INVENTION

Embodiments of the present invention are described below with reference to the drawings. Note that it is obvious that various detailed specific or actual examples and examples of numerical values, character strings, and other signs in the description below are merely for reference and the idea of the present invention is not restricted by all or part of these examples. Also, known schemes, known procedures, known architectures, known circuit structures, and others (hereinafter, "known matters") are not described in detail for the purpose of simplifying the description, and this is not meant to intentionally exclude all or part of these known matters. Since these known matters can be known by persons skilled in the art at the time of filing an application of the present invention, they are naturally included in the description below.

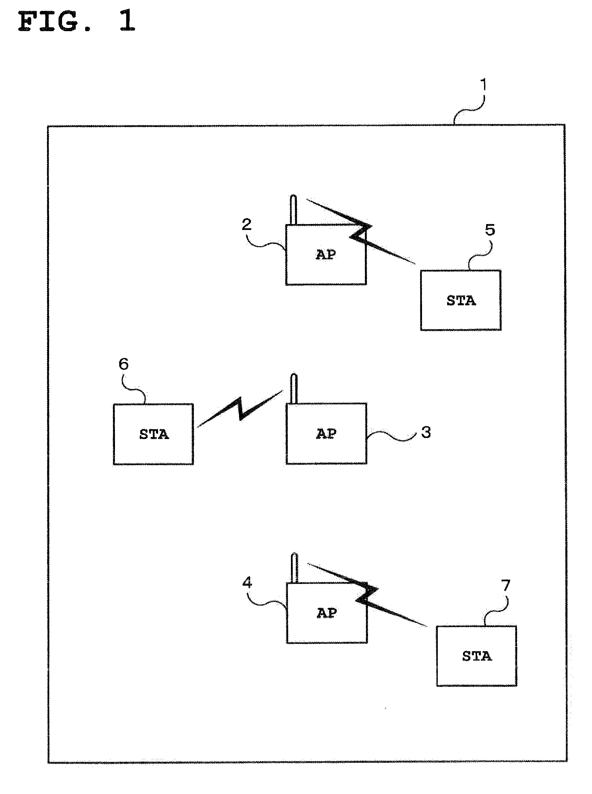

FIG. 1 is a schematic entire structural diagram of a wireless LAN system. In this drawing, a floor 1 is provided with a plurality of wireless relay devices (access points, hereinafter abbreviated as APs) 2 to 4 arranged in a planned manner. Note that the depicted floor 1 is an example, and can be any place or area with a wireless LAN system constructed therein. Also, the number of APs 2 to 4 (three in the drawing) is also an example, and can be at least plural. However, since the problem of power consumption becomes apparent in the case of a wireless LAN system with a large number of APs, several tens to several hundreds or more APs are actually to be targeted. Here, three APs 2 to 4 are to be targeted for the purpose of simplifying the description.

On the floor 1, a plurality of wireless LAN terminals or wireless LAN stations (hereinafter abbreviated as STAs) 5 to 7 are further present. As with the number of APs 2 to 4 described above, the number of STAs 5 to 7 (three in the drawing) is also merely an example. Here, three STAs 5 to 7 are to be targeted for the purpose of simplifying the description.

The STAs 5 to 7 are personal computers, information terminals, and others, and are generally portable or transportable (carriable). However, part of those of a fixed type may also be used as STAs with an advantage of no need of a network cable.

An important point of the STAs 5 to 7 is that, since they are powered up (the function as a wireless LAN terminal is turned ON) as required, they are not always in a use state. Alternatively, all or several of the STAs 5 to 7 are portable or transportable, and these may often be brought out to the field or home. Also in these cases, the STAs 5 to 7 are out of its own network (the wireless LAN system constructed on the floor 1), and therefore are in a non-use state.

Now, when the three STAs 5 to 7 depicted in the drawing are all in a use state, each of the STAs 5 to 7 is connected to any one of the three APs 2 to 4. If all of the STAs 5 to 7 are positioned in the areas of the respective APs 2 to 4, a connection is made with a procedure in which, firstly, the STAs 5 to 7 receive beacons from the APs 2 to 4, power of these beacons are next compared and an AP transmitting a beacon with the largest power is taken as a connection destination candidate, and a necessary authentication process (such as password authentication or predetermined encryption authentication) is then performed and, if authentication is successful, that AP is determined as a connection destination. Then, an STA having established a connection with the AP can freely access a network resource such as a wired LAN or the Internet not shown via that AP.

This connection procedure is called a beacon power selection scheme, which is a basic one. This scheme is often used for a small system such as a domestic wireless LAN system (the number of APs is small, such as one), but is not suitable for a large wireless LAN system in a firm and the like, because data congestion is invited if connections are concentrated on a specific AP. While data congestion is generally made less prone to occur by setting up an appropriate AP arrangement plan, if moving STAs (transportable or portable STAs) occupy a considerably proportion, the situation does not as planned, because the situation often occurs such that STAs are concentrated near a specific AP. In view of this situation, particularly in a large wireless LAN system of a firm or the like, the use of the load distribution technology (for example, Patent Documents 1 and 2) described at the outset is desirable, because data congestion can be avoided by making the number of STAs to be connected to each AP as equal as possible.

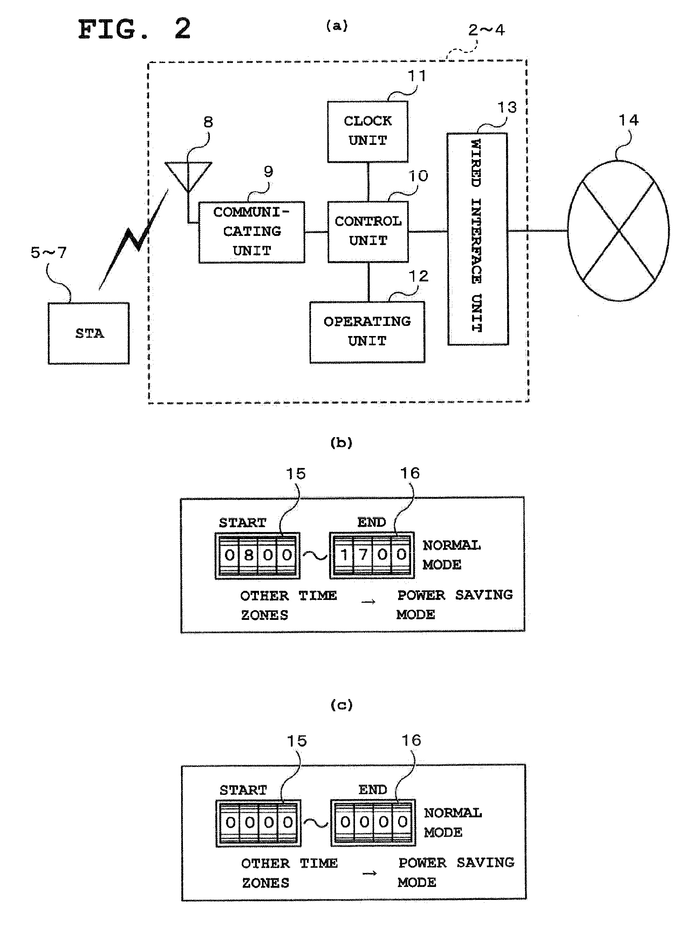

FIG. 2 (a) is a conceptual structural diagram of an AP. In this drawing, the APs 2 to 4 have a common structure. In the following, with the APs being typified by the AP 2, the AP 2 includes an antenna 8, a communicating unit 9, a control unit 10, a clock unit 11, an operating unit 12, and a wired interface unit 13.

The clock unit 11 measures a current time, and outputs the measurement result one after another to the control unit 10.
The control unit 10 is an element for controlling the operation of the AP 2 in a centralized manner, and generally achieves functions required for the AP 2 with a program control scheme. That is, the control unit 10 includes a storage element (generally, a ROM or PROM) that readably retains software (also called firmware, a control program, an application program, or others) programmed with functions required for the AP 2 and a computer (which is called variously, such as a microcomputer, a CPU) that executes the software. With an organic coupling between these software and hardware (the computer and its peripheral circuits and others), the functions required for the AP 2 are virtually achieved. However, this achievement scheme (the program control scheme) is not restrictive. The functions programmed in the software may be achieved with a hard logic, or this achievement scheme with the hard logic and the program control scheme described above may be combined together at an appropriate ratio.

The communicating unit 9 performs wireless communication via the antenna 8 under the control by the control unit 10. This wireless communication is performed according to the known wireless LAN standards (IEEE 802.11 series standards). Incidentally, IEEE 802.11a is a set of communication standards of an OFDM communication scheme using a 5.2 GHZ band at a maximum communication rate of 54 Mbps, IEEE 802.11b is a set of communication standards of a DS-SS communication scheme using a 2.4 GHZ band at a maximum communication rate of 11 Mbps, and IEEE 802.11g is a set of communication standards of an OFDM communication scheme using a 2.4 GHZ band at a maximum communication rate of 54 Mbps. The communicating unit 9 supports all or part of these standards. The communicating unit 9 also supports a predetermined authentication scheme (such as SSID or WPA2-PSK) or a predetermined encryption scheme (such as WEP, WPA, WPA2, TKIP, or AES).

The communicating unit 9 transmits a broadcast signal called a beacon (also called a beacon packet) defined in IEEE 802 in a predetermined cycle. This cycle is generally one specific cycle (100 ms in many cases, which is hereinafter referred to as a first cycle). In the present embodiment, the point is that, in addition to this first cycle, a beacon can be transmitted in a second cycle longer than the first cycle. An object and use of these two cycles (the first and second cycles) will be described in detail further below.

A beacon contains various information regarding the AP that has transmitted the beacon. For example, the information includes AP encryption setting information, AP communication transmission rate setting information, SSID information, and ESSID information. SSID is an abbreviation of Service SetID, and ESSID is an abbreviation of Extended Service SetID. SSID and ESSID are AP-specific identification information (ID), and thirty-two alphanumeric characters at maximum can be arbitrarily set. In the present embodiment, it is assumed that SSID and ESSID are used as representing names of individual APs and, for convenience of description, a character string "My Access Point-1" is set to SSID or ESSID of the AP 2, a character string "My Access Point-2" is set to SSID or ESSID of the AP 3, and a character string "My Access Point-3" is set to SSID or ESSID of the AP 4. That is, the name of the AP 2 is set as "My Access Point-1", the name of the AP 3 is set as "My Access Point-2", and the name of the AP 4 is set as "My Access Point-3".

The wired interface unit 13 intermediates in data transfer between the AP 2 and a wired network 14. The wired interface unit 14 may be a single network or a collection of a plurality of networks (including a wide-area network such as the Internet) mutually connected via a router.

The operating unit 12 is a user interface for making various settings on the AP 2 locally (by the AP 2 itself). Information that can be set by the operating unit 12 includes, for example, an AP network address (IP address), an authentication scheme, an encryption scheme, and SSID and ESSID. In addition to these, in the present embodiment, the information includes a setting of an operation mode (from out of a normal mode and a power-saving mode).

The normal mode and the power-saving mode are different in the magnitude of power consumption (power consumption is lower in the power-saving mode). The difference in power consumption solely depends on the ratio of a beacon transmission period (an Awake state). That is, beacon transmission in the normal mode is performed in the first cycle, and beacon transmission in the power-saving mode is performed in the second cycle longer than the first cycle. As described above, since the first cycle is generally 100 ms, in the normal mode to which this first cycle is applied, ten beacon transmissions are performed per second.

Now, with a time required for one Awake state (beacon transmission period) is taken as x, a total Awake state time per second in the normal mode is 10x. On the other hand, if the second cycle is set at 500 ms for convenience, in the power-saving mode to which this second cycle is applied, two beacon transmissions are performed in one second, and a total Awake state time per second in the power-saving mode is 2x.

As such, when the first cycle is set at 100 ms and the second cycle is set n-fold, the total Awake state time in the power-saving mode can be decreased to 1/n of the total Awake state time in the normal mode. Also, the AP is configured to consume maximum power in an Awake state. As a result, by performing beacon transmission in the second cycle n times longer than the first cycle, the total Awake state time can be decreased, and the power consumption amount can be suppressed by that decreased amount.

FIG. 2 (b), (c) are structural diagrams each depicting an example of the operating unit 12. These drawings depict specific examples for manually setting an operation mode (from out of the normal mode and the power-saving mode). These specific examples are each configured with two dial switches 15 and 16 aligned laterally and further surrounded by predetermined descriptive character strings (such as "start", "end", "normal mode", "other time zones", and "power-saving mode"). The two dial switches 15 and 16 are each for time setting and, it is assumed herein that each is configured of a train-of-four rotary dial. The rotary dial has an outer perimeter inscribed with numerals from 0 to 9. For example, as in (b), when "0800" is set to the dial switch 15 on left in the drawing and "1700" is set to the dial switch 15 on right in the drawing, a time zone from 08:00 to 17:00 in twenty four hour notation (eight in the morning to five o'clock in the evening in twelve hour notation) is set.

Here, the time zone set in two dial switches 15 and 16 is taken as an applied time zone in the "normal mode". Therefore, in (b), the other time zones, that is, 00: 00 to 08: 00 and 17:00 to 24:00, each automatically become an applied time zone in the "power-saving mode". Note that the time zone of (b) (08: 00 to 17:00) is an example, merely representing a typical business hour zone in many workplaces. It goes without saying that an appropriate time zone can be set according to the actual conditions of the use environment.

Also, depending on the circumstances, the power-saving mode may be unnecessary and the whole day (twenty-four hours) may be required to be set as the "normal mode. In these cases, as depicted in (c), two dial switches 15 and 16 can be set to have a same value (for example, 00:00). With "start" and "end" in the time zone being set as identical to each other, the entire twenty-four hours can be set as the "normal mode".

In both (b) and (c), an important point is that a time-series schedule of two operation modes (the normal mode and the power-saving mode) can be freely and manually set to the AP 2 and, as user interface means for this purpose, the AP 2 includes the operating unit 12.

Note that while a time zone in the "normal mode" is set herein with the dial switches 15 and 16, the reverse will do. That is, a time zone in the "power-saving mode" may be set with the dial switches 15 and 16. Also, a time zone may be set with a method other than those exemplified as described above (the dial switches 15 and 16). For example, a time zone may be set with a liquid-crystal panel and an operation button in combination or a liquid-crystal panel and a touch panel in combination. Alternatively, a Web server function may be incorporated inside the AP 2 (such as the control unit 10) and, with this Web server, a web document for manually setting a time-series schedule in two operation modes (the normal mode and the power-saving mode) may be made public to the wired network 14. This is preferable because a time-series schedule in two operation modes (the normal mode and the power-saving mode) can be remotely set from any personal computer (however, the one having a function allowing the web document mentioned above to be viewed and operated) on the wired network 14.

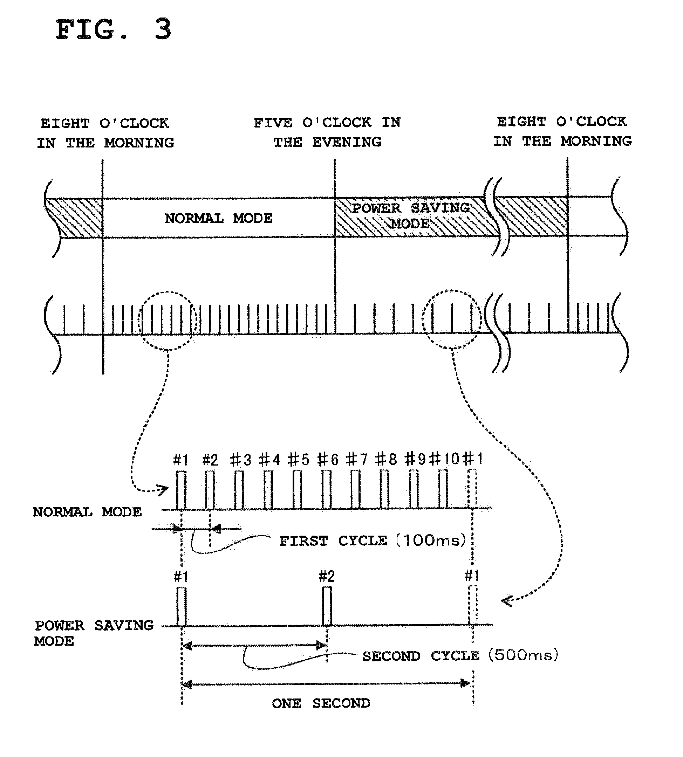

FIG. 3 is a diagram for describing the normal mode and the power-saving mode. An upper row represents a time-series schedule in two operation modes, and a second row from above represents timings of beacon transmission in each mode. For example, if an operation is performed in the "normal mode" in a time zone from eight o'clock in the morning to five o'clock in the evening and an operation is performed in the "power-saving mode" in the remaining time zones, in comparison with a beacon cycle in the normal mode (the first cycle), a beacon cycle in the power-saving mode (the second cycle) is longer than the first cycle. A lower row in the drawing depicts a partially enlarged view of beacons in each of the normal mode and the power-saving mode. This enlarged view depicts beacons occurring during one second for convenience. Ten (#1 to #10) beacons are equidistantly aligned in the normal mode, and two (#1 and #2) beacons are equidistantly aligned in the power-saving mode. Note that the numbers of beacons per second (ten and two) are each merely an example when the first cycle is set at 1000 ms and the second cycle is set at 500 ms.

As has been described also above, the power consumption amount of the AP 2 depends on the ratio of the beacon transmission period (the Awake state). That is, when the beacon cycle in the normal mode (the first cycle) is set at 100 ms and the beacon cycle in the power-saving mode (the second cycle) is set at an n-fold value of the first cycle, the total Awake state time in the power-saving mode can be decreased to 1/n of the total Awake state time in the normal mode. Thus, as the operation ratio of the "power-saving mode" is increased, the power consumption amount of the AP 2 can be suppressed.

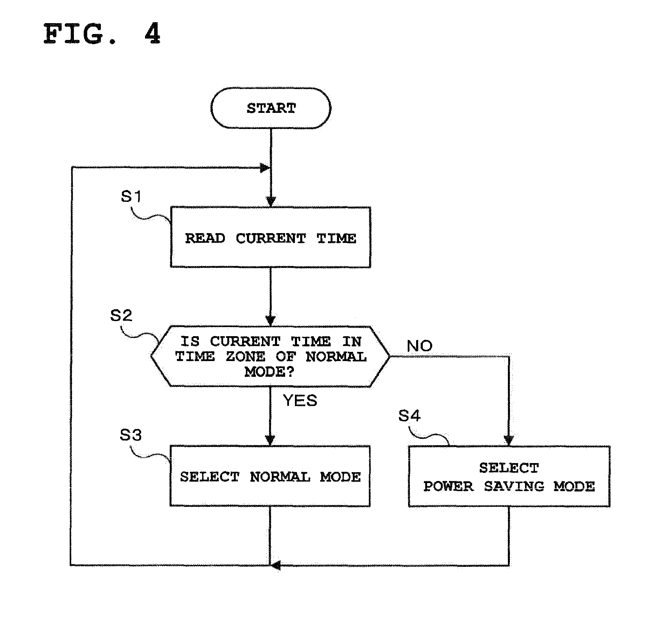

FIG. 4 is a diagram depicting an operation flow of the control unit 10 of the AP. In this operation flow, firstly, a current time measured by the clock unit 11 is read (Step S1). Next, it is determined whether the current time is in the time zone of the normal mode set by the operating unit 12 (Step S2). If the current time is in the time zone, the normal mode in which a beacon is transmitted in the first cycle is selected (Step S3), and then Step S1 and onward is repeated again. On the other hand, when the determination result at Step S2 is NO, that is, when the current time is not in the time zone of the normal mode set by the operating unit 12, it is determined that the current time is in the time zone of the power-saving mode in which a beacon is transmitted in the second cycle longer than the first cycle, and the power-saving mode is selected (Step S4). Then, Step S1 and onward is repeated again.

As such, the current time is regularly read, and it is determined whether the current time is in the time zone of the normal mode set by the operating unit 12. If the current time is in the time zone, the "normal mode" is selected. On the other hand, if the current time is not in the time zone, the "power-saving mode" is selected. With these operations being repeatedly performed, two modes (the normal mode and the power-saving mode) can be alternatively selected for use according to the time-series schedule. And, when the power-saving mode is selected, the number of times of beacon transmission is decreased (the Awake state time is decreased), and AP power consumption can be suppressed by that decreased amount.

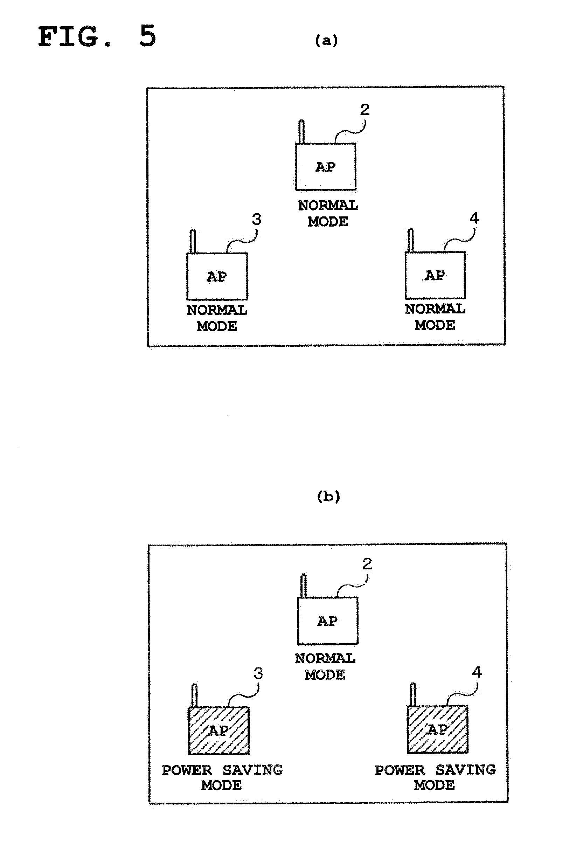

FIG. 5 shows diagrams for describing two operation modes (the normal mode and the power-saving mode). (a) represents the state in which all APs 2 to 4 are operating in the "normal mode", and (b) represents the state in which one AP 2 is operating in the "normal mode" and the remaining APs 3 and 4 are operating in the "power-saving mode". The state of (a) corresponds to a time zone (in an office hour zone) in which many STAs are connected to APs, and the state of (b) corresponds to a time zone (out of the office hour zone) in which a small number of STAs are connected to APs. For these operations, the APs 3 and 4 is set in the manner depicted in FIG. 2 (b), and the AP 2 is set in the manner depicted in FIG. 2 (c). The APs 3 and 4 operate in the "normal mode" at 08:00 to 17:00 and in the "power-saving mode" in other time zones. The AP 2 operates in the "normal mode" throughout the day (for twenty-four hours).

For the reason described above, the following effects can be achieved in the present embodiment.

### (1) Improvement in AP power-saving capability

In addition to the normal beacon cycle (the first cycle), the beacon cycle (the second cycle) longer than the first cycle can be selected. Therefore, since power consumption at the time of beacon transmission is generally large, AP power-saving capability can be improved by decreasing the frequency of beacon transmission.

### (2) Improvement in flexibility of operation plane

The AP operation mode (the normal mode and the power-saving mode) can be freely set according to the actual conditions. Therefore, for example, for an AP placed in an environment where many STAs are present during the daytime and only a small number of STAs are present during the night, the "normal mode" can be set during the daytime, and the "power-saving mode" can be set during the night. For an AP placed in, for example, a conference hall where a conference is held irregularly, the "normal mode" can be set during a holding period and the "power-saving mode" can be set during other periods. As such, settings can be freely and flexibly performed. Thus, an advantage allowing power-saving capability to be sought while keeping a wireless LAN environment can be obtained.

### (3) Avoidance of communication disruption when all APs are in the power-saving mode

Since beacon transmission is performed even in the power-saving mode (although the cycle is longer than that in the normal mode), even if all APs are in the power-saving mode, the STA can capture a beacon from any of these APs in the power-saving mode and issue a connection request to an AP in response to the beacon. A difference between the normal mode and the power-saving mode resides solely in the beacon cycle. Although operating in the power-saving mode, the AP (the AP operating in the power-saving mode) can respond to the connection request from the STA to establish a connection, and can perform data transmission and reception with the STA. Therefore, even if all APs are in the power-saving mode, an STA nearby can perform communication via the APs, and no communication disruption occurs.

The embodiment includes other various modification examples and developed examples. For example, the following developed example may be possible.

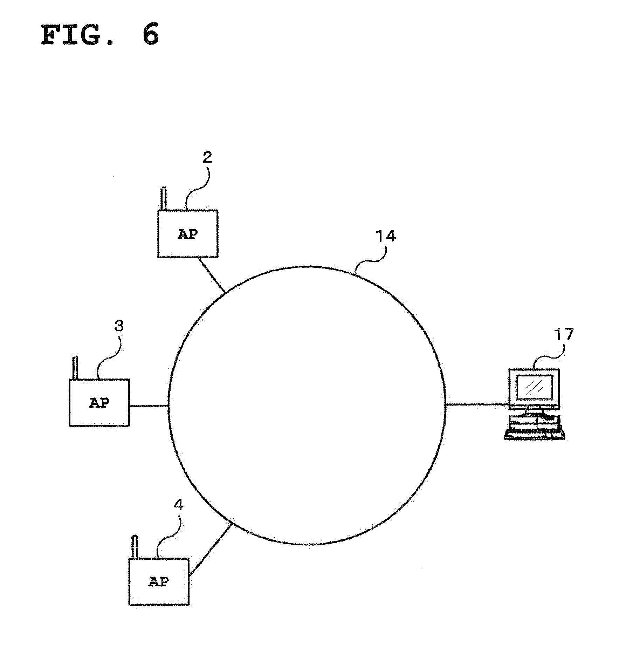

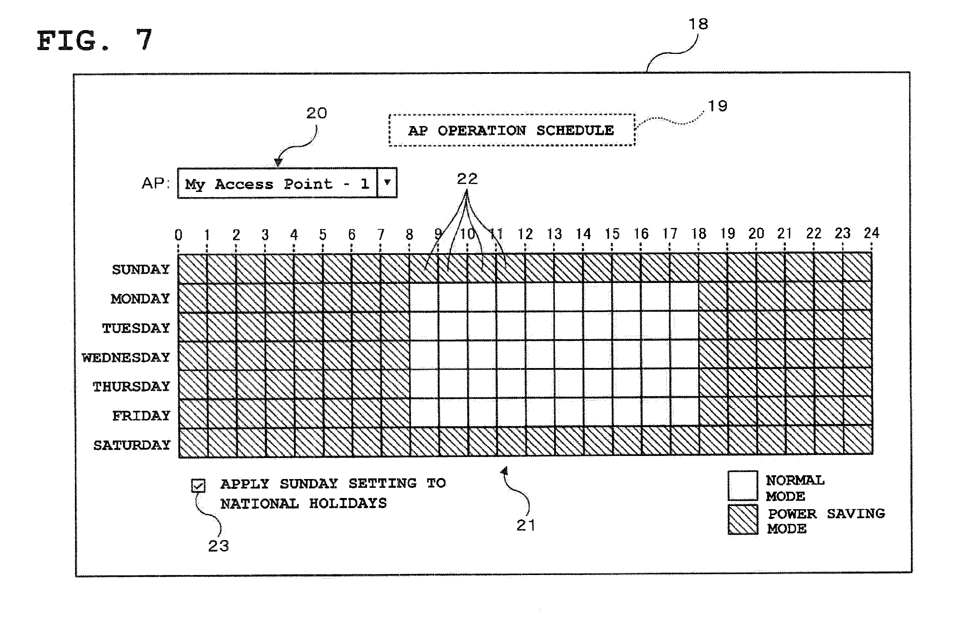

FIG. 6 is a diagram depicting a developed example of the embodiment. In this drawing, the plurality of APs 2 to 4 are connected to the wired network 14 and an AP management server 17 is connected. This AP management server (hereinafter simply referred to as a server) 17 may be a personal computer, for example. In short, the embodiment can be any as long as the embodiment has a function capable of displaying, as required, an interface screen (refer to FIG. 7), which will be described further below, changing the contents of the interface screen in response to a user operation, and remotely setting the changed results to a specified AP via the wired network 14.

FIG. 7 is a diagram depicting an example of an interface screen. This interface screen 18 is displayed as required on a display of the server 17 of FIG. 6. The interface screen 18 has a text area 19 with a title character string on an uppermost part, below which a list box 20 for specifying an AP is placed, and a schedule setting area 21 placed over an approximately entire center part of the screen. The schedule setting area 21 has time columns (0 to 24) in a horizontal direction and days-of-weeks row (Sunday, Monday, Tuesday, Wednesday, Thursday, Friday, and Saturday) in a vertical direction, and a toggle button 22 is placed at every point of intersection of the columns and the rows. Note that while the reference numeral (22) is provided only part of the toggle buttons in the drawing, this is for convenience of the drawing. In practice, all cells positioned at the points of intersections of the columns and the rows are toggle buttons.

The toggle buttons 22 can be individually operated, and the surface color of each button is alternately changed between a first color (white in the drawing) and a second color (hatched in the drawing for convenience) at every operation. The first color corresponds to the "normal mode", and the second color corresponds to the "power-saving mode".

Also, as list items in the list box 20, the names of all APs (according to the example described above, the name of the AP 2 is "My Access Point-1", the name of the AP 3 is "My Access Point-2", and the name of the AP 4 is "My Access Point-3") are set. By pressing an inverted-triangular button on the right of the list box 20, the list items are displayed as a list, and any name can be selected from out of these items.

Note that if a check box 23 is provided in consideration of national holidays and this check box 23 has been checked, it is desirable to apply the mode set in Sunday also to national holidays.

Now, with "My Access Point-1" (the name of the AP 2) selected in the list box 20, the colors of all of the toggle buttons 22 are assumed to be set as depicted in the drawing. That is, it is assumed that all times (00:00 to 24:00) on Sunday and Saturday are set with the second color, and 08:00 (eight o'clock in the morning) to 18:00 (six o'clock in the evening) on Monday to Friday are set with the first color, and the remaining time zones are set with the second color.

As described above, the first color represents the "normal mode" and the second color represents the "power-saving mods". Therefore, in this setting, the AP 2 with the name "My Access Point-1" is set with a time-series schedule in which the AP 2 is instructed to operate in "the power-saving mode" all day (00: 00 to 24:00) on Sunday and Saturday, in the "normal mode" at 08:00 (eight o'clock in the morning) to 18:00 (six o'clock in the evening) from Monday to Friday, and in the "power-saving mode" in the remaining time zones.

The same goes for the other APs 3 and 4. With the name of the AP 3 ("My Access Point-2") or the name of the AP 4("My Access Point-3") selected from the list box 20, the procedure described above is repeated.

By using this interface screen 18, necessary schedule settings can be performed with a remote operation without appearance at the APs 2 to 4 every time. Furthermore, with the graphical interface screen 18 excellent in intuitiveness, an erroneous operation is less prone to be invited. Still further, anyone can easily make necessary schedule setting without requiring any special training.

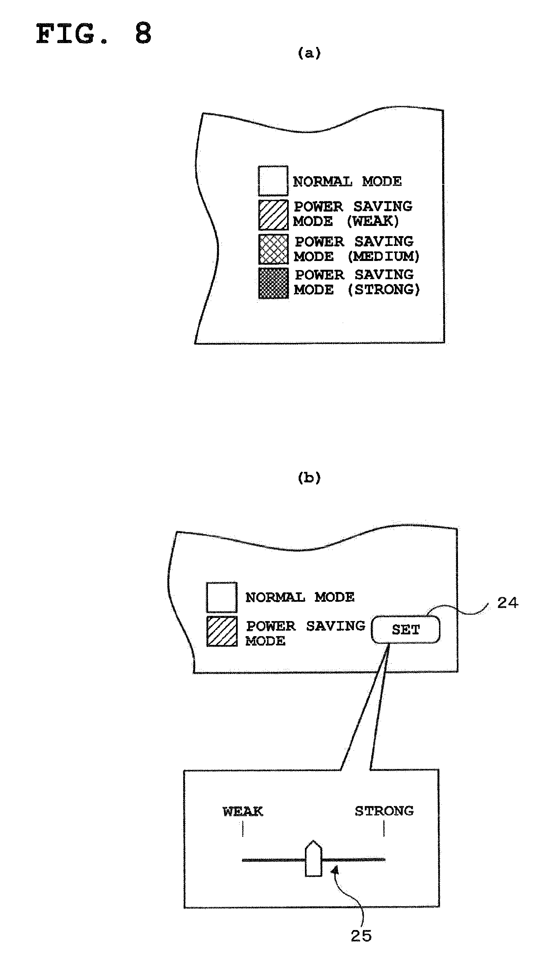

FIG. 8 shows diagrams each depicting a partially improved interface screen 18 of FIG. 7. As in (a), the strength of the power-saving mode may be changed in a stepwise manner. For example, the strength of the power-saving mode may be changeable in three steps, that is, "weak", "medium", and "strong". When power-saving capability is valued, "strong" can be selected. When the communication environment is valued, "weak" can be selected. When a trade-off is sought therebetween, "medium" can be selected. Here, "weak", "tedium", and "strong" of the power-saving mode mean that the length of the second cycle is set as "short", "medium", and "long", respectively, and the relation in time is such that the "first cycle"<"short"<"medium"<"long".

However, if this improved idea is adopted, the toggle buttons 22 for two optional operations cannot be used. Therefore, in place of the toggle buttons 22, a normal button control is used. A program can be created such that sequential changes among four colors including that of the normal mode are made every time the button control is operated. For example, a simple program can be created such that a counter variable that changes from 1 to 4 every time the button control is operated is prepared and, according to the value of the counter variable, the surface color of the button control is changed to a first color (the normal mode), a second color (the power-saving mode/weak), a third color (the power-saving mode/medium), and a fourth color (the power-saving mode/strong). Note that the "variable" is a program term indicating a virtual container capable of accommodating (storing) any value and, in practice, refers to a storage space (also called a register) at a specific address on memory.

Alternatively, the interface screen may be as depicted in (b). In (b), a set button 24 for the power-saving mode is provided and, when this set button 24 is pressed, a slide bar control 25 capable of setting the strength of the power-saving mode in a stepless manner is displayed on the screen. With this, the toggle buttons 22 can be left as they are. Furthermore, since the strength of the power-saving mode can be adjusted in a stepless manner, detailed power-saving capability according to the actual conditions can be obtained.

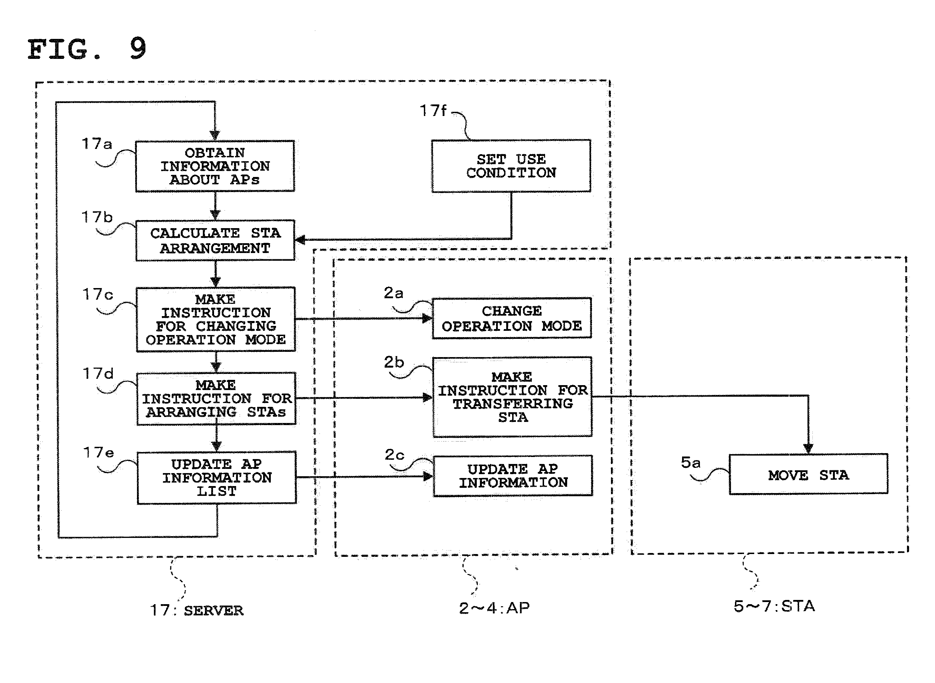

FIG. 9 is a diagram depicting relations among the APs 2 to 4, the STAs 5 to 7, and the server 17. The server 17 includes a function 17a of obtaining information about the APs, a function 17b of calculating an STA arrangement, a function 17c of making an instruction for changing the operation mode, a function 17d of making an instruction for arranging the STAs, a function 17e of updating an AP information list, and a function 17f of setting a use condition. The APs 2 to 4 each include a function 2a of changing the operation mode, a function 2b of making an instruction for transferring an STA, and a function 2c of updating the AP information. The STAs 5 to 7 each include a function 5a of moving the STA.

The server 17 obtains information about the APs (17a). This is an operation for investigating which state the managed APs are currently in (an AP operation mode, the number of STAs in connection, and others). Based on use condition settings set in advance by the user using the function 17f of setting the use condition, the server 17 calculates an STA arrangement for each use condition (lightened load or power-saving) (17b). Here, a calculation is performed as to which STA is connected to which AP. To lighten the load, a calculation is made so that connections of the STAs are distributed to APs as many as possible. For power-saving, a calculation is made so that the STAs are connected to APs as small number as possible. The server 17 makes an instruction of an operation mode (the normal mode and the power-saving mode) to each AP (17c). The server 17 makes an instruction of details of transferring the STA to each AP (17d). The server 17 manages and updates AP information as a list after the change of the operation mode and arrangement of STAs are completed (17e). The server 17 repeatedly and regularly performs these functional operations (17a to 17e).

The APs 2 to 4 each change the operation mode (between the normal mode and the power-saving mode) based on the operation mode change instruction issued in the operation mode change (17c) from the server 17 (2a). The APs 2 to 4 each determine where its own STA is to be transferred based on the STA arrangement indicated in the STA arrangement instruction (17d) from the server 17 and make an instruction for movement to each STA (2b). The APs 2 to 4 update the AP information (2c). The updated information is used in obtainment of the AP information (17a) by the server 17. The STAs 5 to 7 each again make a connection with the AP as the transfer destination based on a transfer instruction indicated by the STA transfer instruction (2b).

As such, with load distribution of each of the APs 2 to 4, connections can be avoided from being concentrated on a specific AP, and data congestion can be prevented. In addition, the operation mode (the normal mode and the power-saving mode) of each of the APs 2 to 4 can be freely set with the control from the server 17. Therefore, with the number of APs operating in the power-saving mode being appropriately set according to the operation actual conditions, a unique effect can be obtained such that power consumption in the entire system can be suppressed, thereby contributing to power saving.

Here, the "power saving mode" of the APs 2 to 4 is studied in detail. The power saving mode of the APs 2 to 4 is, in short, an operation mode for suppressing the power consumption amount of the APs 2 to 4. Needless to say, the power consumption amount is at minimum (therefore, the power saving effect is at maximum) when the APs 2 to 4 are turned OFF. However, the APs 2 to 4 in a powered-off state no longer function as wireless relay devices (as if they are not present), and therefore this is not suitable for a wireless LAN system. This is because if an STA is positioned near such an AP (a powered-off AP), the STA cannot make wireless connection, as a matter of course.

Therefore, even in the power saving mode, a basic function (a wireless relay function) of the APs 2 to 4 has to be left. That is, it is required to suppress power consumption while the basic function of wireless relaying is left. To attain this proposition, the inventors of the present invention have studied diligently and, as a result, have conceived that the proposition mentioned above, that is, suppression of power consumption while the basic function of wireless relaying is left, can be attained by adjusting a beacon transmission cycle.

For example, if a beacon cycle (a first cycle) in the normal mode is set as general 100 ms and a beacon cycle (a second cycle) in the power saving mode is set as 500 ms, five times as long as the length of the first cycle, the number of times of beacon transmission per second can be decreased from ten in the normal mode to 1/5, that is, two, in the power saving mode. Since it is evident that power consumption at beacon transmission (that is, in the AWake state) is larger than that at non-transmission, after all, according to the decrease in the number of times of beacon transmission, power consumption of the AP (the AP operating in the power saving mode) can be suppressed. In addition, although the cycle is long, beacons are regularly transmitted, and therefore the basic function as a wireless relay device is not lost. As such, by adjusting the beacon transmission cycle, the proposition mentioned above, that is, suppression of power consumption while the basic function of wireless relaying is left, can be attained.

It goes without saying that the second cycle is not restricted to the example mentioned above (500 ms). When power saving capability is valued, the second cycle may be longer. However, when an upper-limit time for beacon searching (a so-called timeout) is set at an STA side, it is required to set a cycle so that the cycle does not exceed the timeout. If a timeout is not set, there is no harm in making the second cycle longer. The maximum length of the second cycle (if the timeout mentioned above is ignored) solely depend on the perception (an endurable limit) of an STA user. Many users should allow a wait time of several seconds to several tens of seconds. Even several minutes should be allowed if connections are made only several times per day, although users feel "it is hard to connect". In view of this, the second cycle is desirably as long as possible if the situation allows. The longer the second cycle, the more power saving capability is improved.

Meanwhile, in recent years, not fixed but portable access points have been put in practical use. For example, an access point such as Pocket WiFi (a registered trademark of eMobile Ltd.) is present. An access point of this type is hereinafter referred to as a "portable AP" for convenience. The portable AP is characterized to have a function as a wireless relay device and a function as a wireless communication device using a portable telephone network for data transfer as well.

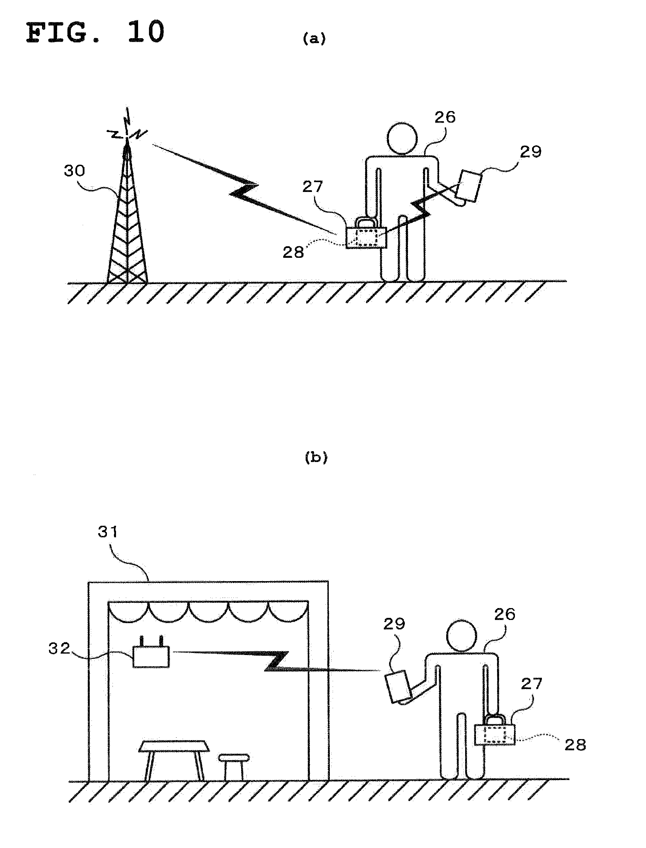

FIG. 10 (a) is a diagram depicting a typical use state of a portable AP. In this drawing, a user 26 puts a portable AP 28 in a bag 27, and further carries a portable information terminal 29 having an STA function. The portable AP 28 can perform data transfer with a nearby portable telephone base station 30, and can transmit a beacon in a predetermined distance range to establish a wireless connection with an STA responding to this beacon (the portable information terminal 29 in this drawing).

Therefore, when two conditions are satisfied, that is, when the distance between the portable information terminal 29 and the portable AP 28 is within a predetermined range and this portable AP 28 is positioned in a service area of the portable telephone base station 30, the portable information terminal 29 can access a portable telephone network via the portable AP 28. Therefore, for example, the user can receive mails and perform Internet surfing irrespectively of place. As such, only with carrying the portable AP 28, the portable information terminal 29 with an STA function but without a telephone function can be freely used as a data terminal in the portable telephone network.

Meanwhile, a place with a fixed AP may be present in the field or others. For example, a place called HOTSPOT (a registered trademark of NTT Communications Corporation) is present (in a station, airport, or coffee shop).

FIG. 10 (b) is a diagram depicting a use state at HOTSPOT. In this drawing, the user 26 is conventionally required to carry out a procedure of powering the portable AP 28 OFF and operating the portable information terminal 29 to connect to an AP 32 in HOTSPOT 31. When the technical idea of the present embodiment is applied, such a cumbersome procedure is not required.

At least three technological matters are required for the purpose describe above. Firstly, the operation mode of the portable AP 28 is switchable to two modes, that is, the normal mode and the power saving mode. Secondly, a beacon emitted from an AP other than the portable AP 28 (a beacon emitted from the AP 32 in the HOTSPOT 31 in this drawing) can be captured. Thirdly, when a beacon emitted from an AP other than the portable AP 28 is captured, the operation mode of the portable AP 28 is switchable from the normal mode to the power saving mode.

While the first technology relates to a technology to be implemented in the portable AP 28, the second and third technologies may be implemented in either of the portable AP 28 and the portable information terminal 29. Since the portable information terminal 29 has a beacon capturing function (an STA function) in practice, it is natural to implement the second technology in the portable information terminal 29. It is also natural to implement the third technology for switching the operation mode of the portable AP 28 from the normal mode to the power saving mode at the time of capturing the beacon in the portable information terminal 29.

With the use of the portable AP and the portable information terminal 29 with these three technological matters applied thereto, for example, when the user comes near the HOTSPOT 31 as depicted in FIG. 10 (b), a beacon emitted from the AP 32 of that HOTSPOT 31 can be captured with the STA function of the portable information terminal 29. Also, in response to the beacon capturing, the operation mode of the portable AP 28 can be changed from the normal mode to the power saving mode. Therefore, thereafter, in response to the beacon from the AP 32 of the HOTSPOT 31, the portable information terminal 29 can establish a wireless connection with that AP 32 and can make a network access via the AP 32 of the HOTSPOT 31. As a result, the procedure described above (such as powering the portable AP 28 OFF) can be advantageously omitted. In addition, since the portable AP 28 operates in the power saving mode during that period, power consumption of the portable AP 28 can also be advantageously suppressed to make the battery last longer.

The whole part of the exemplary embodiments disclosed above can be described as, but not limited to, the following supplementary notes.

### (Supplementary Note 1)

A wireless relay device emitting a beacon and making a wireless connection with a terminal responding to the beacon,
the device comprising:
selecting means capable of alternatively selecting a normal mode in which the beacon is emitted in a first cycle and a power saving mode in which the beacon is emitted in a second cycle longer than the first cycle.
According to Supplementary Note 1, since a beacon is emitted in the second cycle longer than the first cycle, the number of times of beacon emission can be decreased to improve power saving capability. Also, since beacons are not disrupted, a connection delay is not caused.

### (Supplementary Note 2)

The wireless relay device according to Supplementary note 1, further comprising:
user interface means for providing a user interface for making a specification to the selecting means as to select between the normal mode and the power saving mode.
According to Supplementary Note 2, any of two operation modes can be set manually.

### (Supplementary Note 3)

A wireless LAN system including the wireless relay device according to Supplementary Note 1, wherein the system has a control device including the user interface means according to Supplementary note 2 on a LAN.
According to Supplementary Note 3, any of two operation modes can be set manually and remotely.

### (Supplementary note 4)

The wireless relay device according to Supplementary note 2, wherein the user interface means can alternatively specify the normal mode and the power saving mode according to a schedule on a time-series basis.
According to Supplementary Note 4, for example, an appropriate operation schedule can be set along with daily activities in a manner such that the normal mode is set from eight o'clock in the morning to five o'clock in the evening and the power saving mode is set otherwise.

### (Supplementary note 5)

The wireless relay device according to Supplementary note 1, wherein the selecting means can alternatively specify the normal mode and the power saving mode according to presence or absence of reception of a beacon from another wireless relay device.
According to Supplementary Note 5, for example, a technology suitable by being applied to a portable wireless relay device can be provided.

### (Supplementary Note 6)

The wireless relay device according to Supplementary note 6, further comprising:
cycle changing means capable of changing the second cycle in a stepwise or stepless manner.
According to Supplementary Note 6, the strength of the power saving mode can be changed, and a minute power saving effect can be obtained.

### (Supplementary Note 7)

A method of controlling a wireless relay device emitting a beacon and making a wireless connection with a terminal responding to the beacon,
the method includes:
a selecting step of being able to alternatively select a normal mode in which the beacon is emitted in a first cycle and a power saving mode in which the beacon is emitted in a second cycle longer than the first cycle.
According to Supplementary Note 7, as with Supplementary note 1, since a beacon is emitted in the second cycle longer than the first cycle, the number of times of beacon emission can be decreased to improve power saving capability. Also, since beacons are not disrupted, a connection delay is not caused.

### (Supplementary Note 8)

A program for functioning a computer of a wireless relay device emitting a beacon and making a wireless connection with a terminal responding to the beacon as selecting means capable of alternatively selecting a normal mode in which the beacon is emitted in a first cycle and a power saving mode in which the beacon is emitted in a second cycle longer than the first cycle.
According to Supplementary Note 8, the functions in Note 1 can be provided in the form of software (a program).

### DESCRIPTION OF REFERENCE NUMRRALS

2-4 AP (wireless relay devices)
5-7 STA (terminals)
10 control unit (selecting means, computer)
12 operating unit (user interface)
14 wired network (LAN)
17 server (control unit, user interface means)
18 user interface screen (user interface)
25 slide bar control (periodic changing means)

## Claims

1. A wireless relay device emitting a beacon and making a wireless connection with a terminal responding to the beacon,
the device comprising:
selecting means capable of alternatively selecting a normal mode in which the beacon is emitted in a first cycle and a power saving mode in which the beacon is emitted in a second cycle longer than the first cycle.

2. The wireless relay device according to claim 1, further comprising:
user interface means for providing a user interface for making a specification to the selecting means as to select between the normal mode and the power saving mode.

3. A wireless LAN system including the wireless relay device according to claim 1, wherein the system has a control device including the user interface means according to claim 2 on a LAN.

4. The wireless relay device according to claim 2, wherein the user interface means can alternatively specify the normal mode and the power saving mode according to a schedule on a time-series basis.

5. The wireless relay device according to claim 1, wherein the selecting means can alternatively specify the normal mode and the power saving mode according to presence or absence of reception of a beacon from another wireless relay device.

6. The wireless relay device according to claim 1, further comprising:
cycle changing means capable of changing the second cycle in a stepwise or stepless manner.

7. A method of controlling a wireless relay device emitting a beacon and making a wireless connection with a terminal responding to the beacon,
the method comprising:
a selecting step of being able to alternatively select a normal mode in which the beacon is emitted in a first cycle and a power saving mode in which the beacon is emitted in a second cycle longer than the first cycle.

8. A program for functioning a computer of a wireless relay device emitting a beacon and making a wireless connection with a terminal responding to the beacon as selecting means capable of alternatively selecting a normal mode in which the beacon is emitted in a first cycle and a power saving mode in which the beacon is emitted in a second cycle longer than the first cycle.
